(19)

Europäisches Patentamt
European Patent Office
Office européen des brevets

(11) **EP 3 459 671 A1**

(12) **EUROPEAN PATENT APPLICATION**
published in accordance with Art. 153(4) EPC

(43) Date of publication:
**27.03.2019 Bulletin 2019/13**

(21) Application number: **17799221.1**

(22) Date of filing: **09.05.2017**

(51) Int Cl.:
**B23K 11/16** (2006.01) **B23K 11/11** (2006.01)

(86) International application number:
**PCT/JP2017/017578**

(87) International publication number:
**WO 2017/199796 (23.11.2017 Gazette 2017/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.05.2016 JP 2016101294**
**04.04.2017 JP 2017074691**

(71) Applicant: **Kabushiki Kaisha Kobe Seiko Sho (Kobe Steel, Ltd.)**
**Kobe-shi, Hyogo 651-8585 (JP)**

(72) Inventors:
• **MAEDA Kyohei**
**Kanagawa 251-8551 (JP)**
• **IWASE Tetsu**
**Kanagawa 251-8551 (JP)**

(74) Representative: **Müller-Boré & Partner**
**Patentanwälte PartG mbB**
**Friedenheimer Brücke 21**
**80639 München (DE)**

(54) **JOINING STRUCTURE AND METHOD FOR MANUFACTURING JOINING STRUCTURE**

(57)    This joining structure (100) has: a first member (11) formed from high tensile strength steel; a second member (13) formed from high tensile strength steel and stacked on the first member (11); a steel insertion member (15) held in a state inserted from a surface of the second member (13) opposite from the surface on which the first member (11) and second member (13) are stacked toward that surface; and a welding part (19) formed on the insertion tip of the insertion member (15) by the insertion member (15) and the first member (11) being fused. The carbon equivalent Ceq (N1) of the insertion member is lower than the carbon equivalent Ceq (M2) of the second member. Here, the carbon equivalent Ceq is defined by Ceq = C + Si/30 + Mn/20 + 2P + 4S (C, Si, Mn, P and S representing the content (percent by mass) of respective elements with 0 meaning no content). With this joining structure (100), excellent joint strength can be obtained without establishing limits for steel components and workability.

FIG. 1

**Description**

Technical Field

The present invention relates to a joint structure and a method for manufacturing the joint structure.

Background Art

In recent years, high tensile strength steels (HTSS) are applied to automotive body frame or the like in order to realize the weight reduction of a vehicle body for the purpose of reduction of $CO_2$ emissions and strengthening of collision safety, and welding technologies capable of achieving excellent quality of a welded part are required.

Example of a representative welding quality evaluation item representing the quality of the welded part includes static strength of a joint. The static strength includes a tensile shear strength and a cross tensile strength. The tensile shear strength increases almost in proportion to tensile strength of a base plate and on the other hand, the cross tensile strength decreases on the boundary of the tensile strength of 780 MPa or more. One of the causes includes that in a high strength steel sheet having a tensile strength of 780 MPa or more, toughness of a welded part decreases due to high C amount in a base plate component, and when a load of cross peel mode is applied, interface fracture and partial plug fracture (fracture in nugget) are easy to occur. In particular, this tendency is remarkable in a high strength steel sheet having a tensile strength of 980 MPa or more, and various countermeasures are made in order to improve the cross tensile strength so far.

Patent Document 1 discloses that satisfactory cross tensile strength is obtained by limiting contents of C, Si and Cr contributing toughness of a nugget and P, S and N as segregation elements in order to prevent the decrease of toughness of the nugget and the segregation of elements in the nugget.

However, there is a problem that mechanical properties (material strength) are deteriorated by limiting the component amounts (components in steel) of various basic constituent elements in the steel.

Patent Document 2 describes that satisfactory cross tensile strength is obtained by conducting arc spot welding to a sheet assembly obtained by superposing two high tensile strength steels having C amount of 0.7 mass % or more in components in the steel such that the relationship between matric hardness Hv (BM) and hardness Hv (WM) of weld bead (weld metal) satisfies $0.7 \leq Hv(WM)/Hv(BM) \leq 1.2$.

The technology described in Patent Document 2 relates to a technology of forming a welded part having a predetermined hardness by diluting a weld base plate using a welding wire. This technology has a problem that a melt must be supplied to a position at which dilution is conducted and control is difficult. Furthermore, for a welding structure such as automotive bodies, welding is required to be conducted at various angles (welding position), and it may be impossible to supply a melt to a welded part, depending on the angle. Thus, there was the problem in weldability.

Patent Document 3 describes that hardness decreases over a central part from a nugget tip by a spot welding method using high frequency heating, and a nugget having high toughness is formed, and as a result, satisfactory cross tensile strength is obtained.

The technology described in Patent Document 3 relates to a technology of forming a welded part having a predetermined hardness by spot welding using high frequency heating, and a special spot welding machine is required.

In other words, in the conventional technologies, components in steel and a welding method are required to be restricted in a welding joint of high strength steel sheets each other in order to obtain satisfactory cross tensile strength. However, in order to respond to strict $CO_2$ emissions and collision safety, application of high component steel sheet having satisfactory formability is essential. Furthermore, the arc spot welding method has low degree of freedom of welding procedure and an applicable site is limited during automotive assembly. Additionally, spot welding using high frequency heating requires special welding machine and there is a problem on costs. For the above reasons, a method capable to satisfactorily improving high joint strength (cross tensile strength) and weldability is desired in the welding of high strength sheets.

Citation List

Patent Document

Patent Document 1: JP 2012-167338 A
Patent Document 2: JP 2013-10139 A
Patent Document 3: WO 2011/013793 A1

Summary of the Invention

Technical Problems

The present invention has an object to provide a joint structure that can improve joint strength (cross tensile strength) by increasing toughness of a welded part without impairing weldability even in a high tensile strength steel sheet containing large amounts of basic constituent elements in steel, and a method for manufacturing the joint structure.

Solution to Problems

The present invention includes the following embodiments.

(1) A joint structure comprising:

a first member comprising a high tensile strength steel;
a second member comprising a high tensile strength steel and superposed on the first member:

a steel insertion member held by the second member in a state of having been inserted toward a superposition surface between the first member and the second member from a surface of the second member opposite the superposition surface; and
a welded part formed on an insertion tip of the insertion member by melting the insertion member and the first member,

wherein a carbon equivalent Ceq of the insertion member is lower than a carbon equivalent Ceq of the second member, provided that the carbon equivalent Ceq is a value defined by the following formula (1):

$$Ceq = C + Si/30 + Mn/20 + 2P + 4S \ ... \ (1)$$

wherein C, Si, Mn, P and S each represent a content (mass %) of each element, and when the element is not contained, the content thereof is 0.

(2) A joint structure comprising:

a first member comprising a high tensile strength steel;
a second member comprising a high tensile strength steel and superposed on the first member;
a pair of steel insertion members held by the first member and the second member, respectively, in a state of having been inserted toward a superposition surface between the first member and the second member from each surface of the first member and the second member opposite the superposition surface, and
a welded part formed on insertion tips of the pair of the insertion members by melting the insertion members each other,
wherein a carbon equivalent Ceq (M1) of the first member, a carbon equivalent Ceq (M2) of the second member, a carbon equivalent Ceq (N1) of the insertion member inserted in the second member and a carbon content Ceq (N2) of the insertion member inserted in the first member satisfy the following relationships (1) and (2):

$$Ceq = C + Si/30 + Mn/20 + 2P + 4S \ ... \ (1)$$

wherein C, Si, Mn, P and S each represent a content (mass %) of each element, and when the element is not contained, the content thereof is 0; and

$$Ceq \ (M1) + Ceq \ (M2) \geq Ceq \ (N1) + Ceq \ (N2) \ ... \ (2).$$

(3) A method for manufacturing a joint structure by joining a first member comprising a high tensile strength steel and a second member comprising a high tensile strength steel, the method comprising:

a step of inserting a steel insertion member into the second member and holding it; and

a step of superposing the second member on the first member and forming a welded part of the insertion member and the first member in an insertion tip of the insertion member,

wherein a carbon equivalent Ceq of the insertion member is lower than a carbon equivalent Ceq of the second member, provided that the carbon equivalent Ceq is a value defined by the following formula (1):

$$Ceq = C+Si/30+Mn/20+2P+4S \quad ... (1)$$

wherein C, Si, Mn, P and S each represent a content (mass %) of each element, and when the element is not contained, the content thereof is 0.

(4) A method for manufacturing a joint structure by joining a first member comprising a high tensile strength steel and a second member comprising a high tensile strength steel, the method comprising:

a step of inserting steel insertion members into the first member and the second member, respectively, and holding them; and

a step of superposing the second member on the first member so that the insertion members face each other, and forming a welded part of these insertion members in insertion tips of the insertion members,

wherein a carbon equivalent Ceq (M1) of first member, a carbon equivalent Ceq (M2) of the second member, a carbon equivalent Ceq (N1) of the insertion member inserted in the second member and a carbon content Ceq (N2) of the insertion member inserted in the first member satisfy the following relationships (1) and (2):

$$Ceq = C+Si/30+Mn/20+2P+4S \quad ... (1)$$

wherein C, Si, Mn, P and S each represent a content (mass %) of each element, and when the element is not contained, the content thereof is 0; and

$$Ceq\ (M1)+Ceq\ (M2) \geq Ceq\ (N1)+Ceq\ (N2) ... (2).$$

Advantageous Effects of the Invention

According to the present invention, the joint strength (cross tensile strength) can be improved by increasing toughness of a welded part without impairing weldability when high tensile strength steel sheets are joined.

Brief Description of the Drawings

FIG. 1 is a cross-sectional view of a joint structure for explaining the embodiment of the present invention.

FIG. 2 is a process chart, and (A) of FIG. 2 shows the state before insertion of an insertion member, (B) of FIG. 2 shows the state after insertion of an insertion member and (C) of FIG.2 shows the state of a joint structure after insertion and joint of the insertion member.

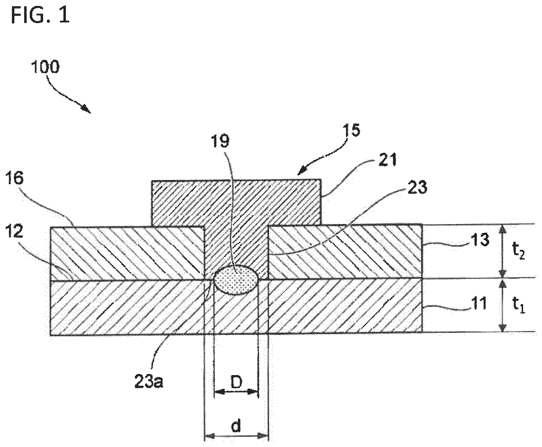

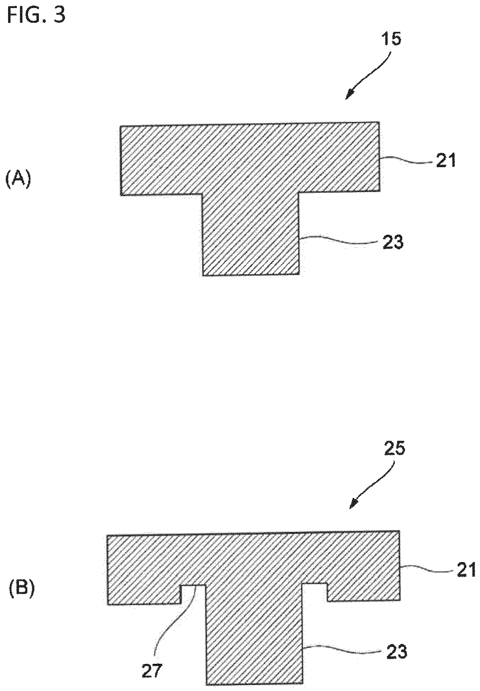

(A) of FIG. 3 is a cross-sectional view of the insertion member shown in FIG. 1, and (B) of FIG. 3 is a cross-sectional view of an insertion member in a first modification example.

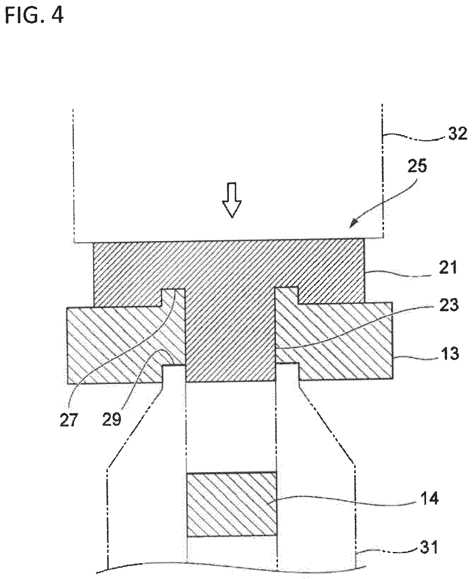

FIG. 4 is a process explanation diagram schematically illustrating a step of fixing the insertion member when the insertion member in the first modification example shown in (B) of FIG. 3 is used.

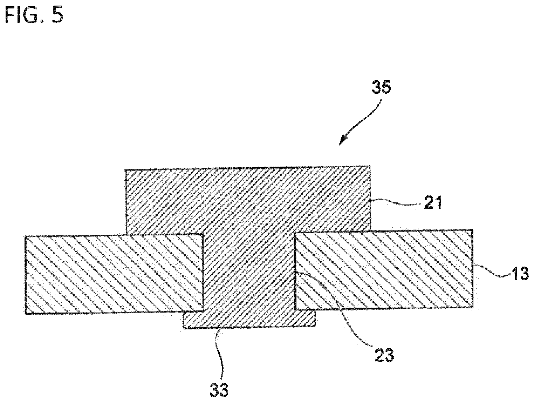

FIG. 5 is a cross-sectional view of an insertion member in a second modification example in which an insertion tip of a shaft has been buckled and fixed to a second member.

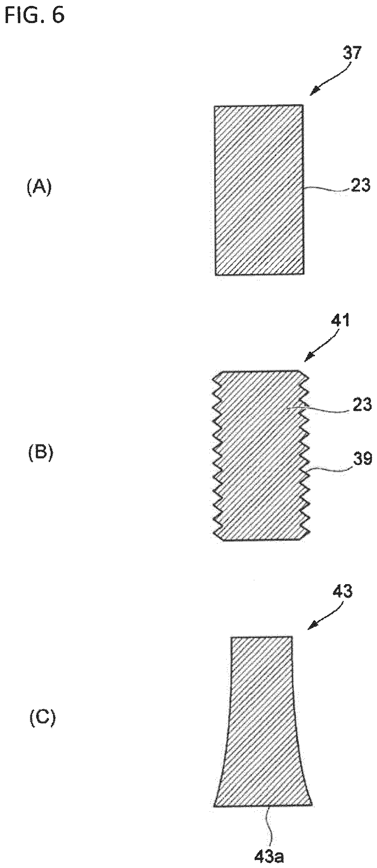

(A) to (C) of FIG. 6 are cross-sectional views of various insertion members each not having a head.

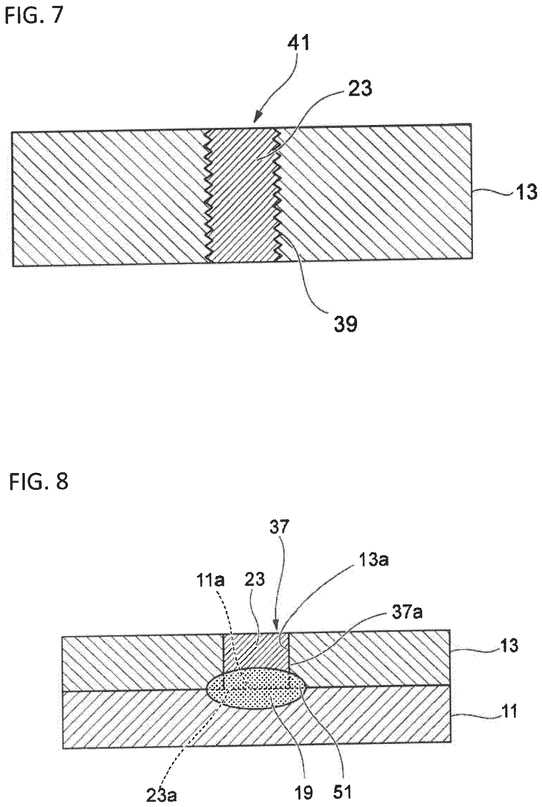

FIG. 7 is a cross-sectional view of the state that the insertion member shown in (B) of FIG. 6 has been fixed to the second member.

FIG. 8 is a cross-sectional view of a welded part formed in a joint structure in another example.

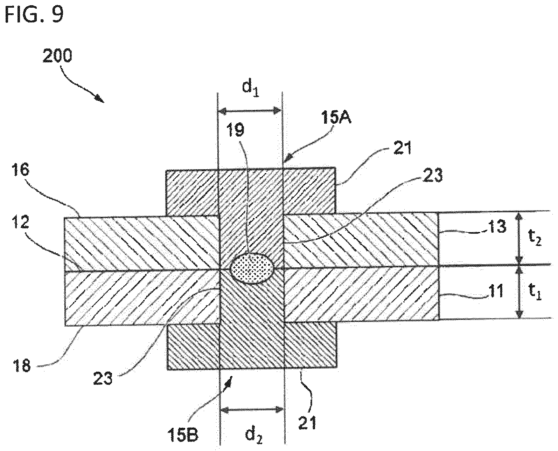

FIG. 9 is a cross-sectional view of a joint structure in a second constitution example in which a welded part has been formed between an insertion tip of a first insertion member and an insertion tip of a second insertion member.

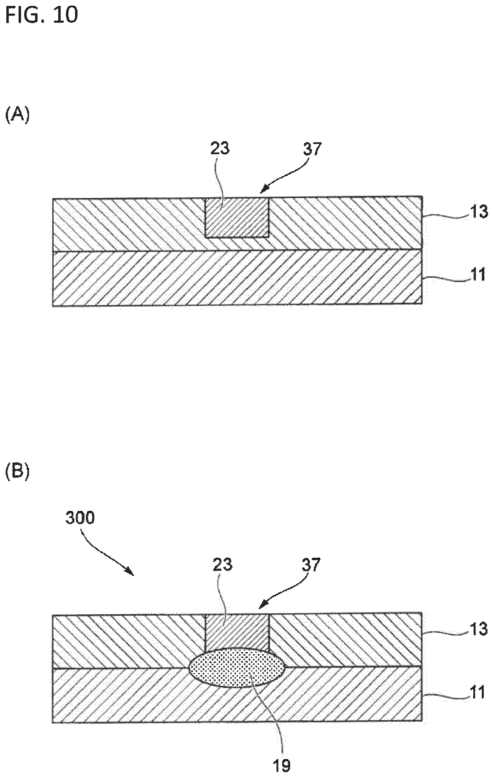

(A) of FIG. 10 is a cross-sectional view of a joint structure before joint in which an insertion member has been inserted without penetrating through a second member, and (B) of FIG. 10 is a cross-sectional view of a joint structure in which the insertion member of (A) of FIG. 10 has been melted with the first member and second member and joined thereto.

Embodiments of Description

The embodiments of the present invention are described in detail below by reference to the drawings.

<Basic constitution of joint structure>

FIG. 1 is a cross-sectional view of a joint structure for explaining the embodiment of the present invention.
A joint structure 100 of the present constitution includes a first member 11 including a high tensile strength steel, a second member 13 including a high tensile strength steel and superposed on the first member 11, and an insertion member 15 and a welded part 19. The high tensile strength steel in the first member 11 and the second member 13 each is constituted of a high tensile strength steel sheet (HTSS) having a tensile strength of 780 MPa or more.
The insertion member 15 is constituted of a rivet having a head 21 and a shaft 23 in the example shown in the drawing. The insertion member 15 includes an iron material being easily weldable to the first member 11 or the second member 13. The insertion member 15 is held by the second member 13 in the state of having been inserted toward a superposition surface 12 between the first member 11 and the second member 13 from a surface 16 of the second member 13 opposite the superposition surface 12 of the second member 13 at the superposition part between the first member 11 and the second member 13. In other words, the insertion member is inserted in the state that the shaft 23 has penetrated through the second member 13, and the heat 21 is locked (fixed) to the second member 13. An insertion tip 23a of the shaft 23 and the first member 11 are joined at the welded part 19.
The welded part 19 is a joined part formed by melting the insertion tip 23a of the insertion member 15 and the first member 11 by a welding treatment such as spot welding. The welded part 19 strongly joins the insertion member 15 and the first member 11.
Carbon equivalent is known as a factor affecting cross tensile strength (CTS) in the joint structure 100. Various formulae are proposed as the formula for obtaining the carbon equivalent, and the following formula (1) is one example. When the value of the carbon equivalent Ceq shown by the formula (1) is equal to or less than a predetermined value (for example, 0.24% or less), it is considered that a fracture form in a cross tensile test is satisfactory and the CTS value does not decrease.

$$Ceq = C + Si/30 + Mn/20 + 2P + 4S \qquad \dots (1)$$

wherein C, Si, Mn, P and S each represent a content (mass %) of each element, and when the element is not contained, the content is 0.
In the joint structure 100 having the present constitution, the carbon equivalent Ceq of the insertion member 15 as defined by the above formula (1) is lower than the carbon equivalent Ceq of the second member 13.
In other words, when the first member 11 and the second member 13 are welded and joined to each other, the carbon equivalent Ceq (M1/M2) in the welded part 19 is an average value of the carbon equivalent Ceq (M1) of the first member 11 and the carbon equivalent Ceq (M2) of the second member 13 as shown in the following formula (2). In this case, the carbon equivalent of the welded part 19 is the same level as the first member 11 and the second member 13 and does not reach the above-described predetermined value or less, and toughness of the welded part 19 is deteriorated.

$$Ceq\ (M1/M2) = \{Ceq\ (M1) + Ceq\ (M2)\}/2 \dots (2)$$

On the other hand, when the insertion member 15 and the first member 11 are joined to each other as in the present constitution, the carbon equivalent Ceq (M1/N1) in the welded part 19 is an average value of the carbon equivalent Ceq (M1) of the first member 11 and the carbon equivalent Ceq (N1) of the insertion member 15 as shown in the following formula (3). In this case, the welded part 19 is diluted with the insertion member 15 having the carbon equivalent lower than that of the first member 11 and is therefore lower than the carbon equivalent Ceq (M1) of the first member 11. As a result, a joint structure having excellent toughness and satisfactory joint strength is obtained due to the decrease of the carbon equivalent of the welded part 19.

$$Ceq\ (M1/N1) = (Ceq\ (M1)+Ceq\ (N1))/2 \ ...\ (3)$$

In other words, in order to improve toughness and peel strength of the welded part 19, the carbon equivalent of the welded part 19 should satisfy that the carbon equivalent Ceq (M1/N1) shown by the formula (3) is lower than the carbon equivalent Ceq (M1/M2) shown by the formula (2). In other words, when the carbon equivalent Ceq (N1) of the insertion member 15 is lower than the carbon equivalent Ceq (M2) of the second member 13, the carbon equivalent of the welded part 19 can be lower than that in the case shown in the formula (2).

In the present invention, the insertion member 15 as a solid is inserted in the second member 13. Therefore, the insertion member 15 with an appropriate volume necessary for dilution can be arranged in the welded part. As a result, dilution of the welded part can be efficiently performed, regardless of a welding posture.

<Detail of joint structure>

Each member of the joint structure 100 having the above constitution is described in detail below.

(High tensile strength steel member)

The first member 11 and the second member 13 are a high tensile strength steel sheet (HTSS) having a tensile strength of 780 MPa or more as described before. The conventional film generally applied to a steel material, such as a metal plating film of zinc or zinc alloy, an organic resin film such as a paint, a lubricant and/or a lubricating oil may be formed on one surface or both surfaces of the first member 11 and second member 13. Those films may be applied as a single layer used alone or a multilayer in combination of those films.

The amount of components in the steel of the first member 11 and second member 13 is not particularly limited, but the preferred range of the content of each element (C, Si, Mn, P, S and other metal elements) contained in the steel and the reasons for limiting the range are described below. The "%" expression of the content of each element all means "mass %".

[C: 0.05 to 0.60%]

C is an element contributing to the improvement of the base plate strength of the steel and is therefore an essential element for a high strength steel sheet. For this reason, as the lower limit of the C content, it is preferably 0.05% or more. On the other hand, when C is excessively added, hardness of the welded part and HAZ increases and satisfactory joint strength is not obtained. For this reason, as the upper limit of the C content, it is preferably 0.60% or less, more preferably 0.40% or less and still more preferably 0.20% or less.

[Si: 0.01 to 3.0%]

Si is an element contributing to deoxidation. For this reason, as the lower limit of the Si content, it is preferably 0.01% or more. On the other hand, when Si is excessively added, resistance to temper softening increases, hardness of the welded part and HAZ excessively increases and satisfactory joint strength is not obtained. For this reason, as the upper limit of the Si content, it is preferably 3.00% or less, more preferably 2.00% or less and still more preferably 1.00% or less.

[Mn: 0.5 to 3.0%]

Mn is an element contributing to the improvement of hardenability and is an essential element for forming a hard microstructure such as martensite. For this reason, as the lower limit of the Mn content, it is preferably 0.5% or more. On the other hand, when Mn is excessively added, hardness of the welded part and HAZ excessively increases and satisfactory joint strength is not obtained. For this reason, as the upper limit of the Mn content, it is preferably 3.0% or less, more preferably 2.5% or less and still more preferably 2.0% or less.

[P: 0.05% or less (not including 0%)]

P is an element being unavoidably mixed in a steel, but is easy to be segregated in particles and grain boundary and deteriorates toughness of the welded part and HAZ. Therefore, P is desirably reduced as possible. For this reason, as the upper limit of the P content, it is preferably 0.05% or less, more preferably 0.04% or less and still more preferably 0.02% or less.

[S: 0.05% or less (not including 0%)]

Similar to P, S is an element being unavoidably mixed in a steel, but is easy to be segregated in particles and grain boundary and deteriorates toughness of the welded part and HAZ. Therefore, S is desirably reduced as possible. For this reason, as the upper limit of the S content, it is preferably 0.05% or less, more preferably 0.04% or less and still more preferably 0.02% or less.

[Other metal elements]

The first member 11 and the second member 13 according to the present invention preferably contain, in addition to C, Si, Mn, P and S as described above:

Al: 1.0% or less (including 0%);
N: 0.01% or less (including 0%);
Ti, V, Nb and Zr in total of 0.1% or less (including 0%);
Cu, Ni, Cr, Mo and B in total of 1.0% or less (including 0%); and
Mg, Ca, REM in total of 0.01% or less (including 0%).

The remainder is preferably Fe and unavoidable impurities. The unavoidable impurities are impurities unavoidably mixed when producing a steel and may be contained in a range that does not impair various properties of the first member 11 and second member 13.
The first member 11 and the second member 13 have a weldable thickness. The member having a thickness of 3 mm or less is generally used as the joint structure 100. A method for forming a high tensile strength steel member is not particularly limited. For example, press molding, roll forming or the like can be used.

(Insertion member)

The material of the insertion member 15 is an iron material as described above and is not particularly limited. For example, a rolled steel material for general structure, a carbon steel wire rod for heating, and the like can be used. Furthermore, the production method is not particularly limited, and an appropriate method such as cutting or forging can be appropriately selected. In addition, the surface of the insertion member 15 can be covered with the conventional film generally applied to a steel material, such as a metal plating film of zinc or zinc alloy, an organic resin film such as a paint, a lubricant and/or a lubricating oil. Those films may be a single layer used alone or a multilayer in combination of those films.
The amount of components in the steel of the insertion member 15 is not particularly limited, but the preferred range of the content of each element (C, Si, Mn, P, S and other metal elements) contained in the steel and the reasons for limiting the range are described below. The "%" expression of the content of each element all means "mass %".

[C: 0.001 to 0.60%]

C is an element being unavoidably mixed in a steel, but there is a limit about the reduction of C in an actual process. Therefore, as the lower limit of the C content, it is preferably 0.001% or more. On the other hand, when C is excessively added, hardness of the welded part increases and satisfactory joint strength is not obtained. For this reason, as the upper limit of the C content, it is preferably 0.60% or less, more preferably 0.40% or less and still more preferably 0.20% or less.

[Si: 0.01 to 3.0%]

Si is an element contributing to deoxidation. For this reason, as the lower limit of the Si content, it is preferably 0.01% or more. On the other hand, when Si is excessively added, resistance to temper softening increases, hardness of the welded part excessively increases and satisfactory joint strength is not obtained. For this reason, as the upper limit of the Si content, it is preferably 3.00% or less, more preferably 2.00% or less and still more preferably 1.00% or less.

[Mn: 0.1 to 3.0%]

Mn forms a compound with S and is an effective element for the reduction of S deteriorating joint strength. For this reason, as the lower limit of the Mn content, it is preferably 0.1% or more. On the other hand, when Mn is excessively added, hardness of the welded part excessively increases and satisfactory joint strength is not obtained. For this reason, as the upper limit of the Mn content, it is preferably 3.0% or less, more preferably 2.5% or less and still more preferably 2.0% or less.

[P: 0.05% or less (not including 0%)]

P is an element being unavoidably mixed in a steel, but is easy to be segregated in particles and grain boundary and deteriorates toughness of the welded part. Therefore, P is desirably reduced as possible. For this reason, as the upper limit of the P content, it is preferably 0.05% or less, more preferably 0.04% or less and still more preferably 0.02% or less.

[S: 0.05% or less (not including 0%)]

S is an element being unavoidably mixed in a steel, but is easy to be segregated in particles and grain boundary and deteriorates toughness of the welded part, similar to P. Therefore, S is desirably reduced as possible. For this reason, as the upper limit of the S content, it is preferably 0.05% or less, more preferably 0.04% or less and still more preferably 0.02% or less.

[Other metal elements]

The insertion member 15 according to the present invention preferably contains, in addition to C, Si, Mn, P and S as described above:

Al: 1.0% or less (including 0%);
N: 0.01% or less (including 0%);
Ti, V, Nb and Zr in total of 0.1% or less (including 0%);
Cu, Ni, Cr, Mo and B in total of 1.0% or less (including 0%); and
Mg, Ca, REM in total of 0.01% or less (including 0%).

The remainder is preferably Fe and unavoidable impurities. The unavoidable impurities are impurities being unavoidably mixed when producing a steel and may be contained in a range that does not impair various properties of the insertion member 15.

(Joining procedures of joint structure)

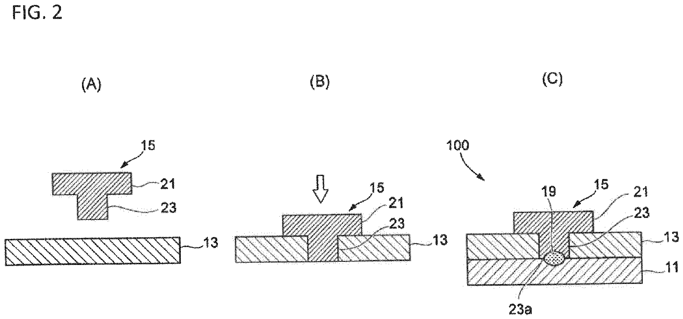

The joining procedures of the joint structure 100 are described below.
(A) of FIG. 2 is a process chart showing the state before insertion of the insertion member 15, (B) of FIG. 2 is a process chart showing the state after insertion of the insertion member 15 and (C) of FIG. 2 is a process chart showing the state of a joint structure after insertion and joint of the insertion member 15.
The joint structure 100 is formed in the following procedures. As shown in (A) of FIG. 2, the insertion member 15 and the second member 13 are arranged so as to face each other. As shown in (B) of FIG. 2, the shaft 23 of the insertion member 15 is driven in the second member 13 and the insertion member 15 is inserted in the second member 13 and held thereby. The second member 13 having the insertion member 15 fixed thereto is superposed on the first member 11, the insertion member 15 and the first member 11 are sandwiched between a pair of spot welding electrodes not shown and welding current is applied. As a result, as shown in (C) of FIG. 2, the welded part (melt nugget) 19 is formed between the insertion tip 23a of the shaft 23 of the insertion member 15 and the first member 11 facing the insertion tip 23a.
In this joint structure 100, the insertion member 15 having a carbon equivalent lower than that of the second member 13 is used. Therefore, in the welded part 19 between the first member 11 and the insertion member 15, the components in the steel of the first member 11 are diluted and the carbon equivalent of the welded part 19 is lower than the carbon equivalent of the first member 11. In other words, the welded part 19 has low carbon equivalent as compared with the case of forming the welded part between the first member 11 and the second member 13 as described above, has excellent toughness and has the joint state achieving good peel strength. Additionally, in the joint structure 100, the insertion member 15 has the head 21, and therefore, the thickness of the welded part 19 can be increased. As a result, further satisfactory joint strength is obtained in the joint structure 100.
Thanks to the above constitution, the joint structure 100 can be a joint structure having excellent toughness and satisfactory joint strength. Furthermore, according to the method for manufacturing the joint structure 100, facilities of general spot welding can be used as they are, complicated control of the welding conditions is not required, and the welding of high tensile strength members each other is appropriately performed without decreasing the joint strength.

<Modification examples of insertion member>

Modification examples of the insertion member 15 are described below.

(First modification example)

(A) of FIG. 3 is a cross-sectional view of the insertion member 15 shown in FIG. 1 and (B) of FIG. 3 is a cross-sectional view of the insertion member of a first modification example. The insertion member 15 shown in (A) of FIG. 3 is formed such that the shaft 23 is projected from the head 21, but as shown in (B) of FIG. 3, the insertion member may be an insertion member 25 in which a concentric ring-shaped groove 27 has been formed at the connecting position between the shaft 23 and the head 21 so as to surround the shaft 23.

FIG. 4 is a process explanation view schematically showing the process of fixing the insertion member 25 in the case of using the insertion member 25 of the first modification example shown in (B) of FIG. 3. When the insertion member 25 having the ring-shaped groove 27 in the head 21 is pressed into the second member 13, a counterpunch 31 having a ring-shaped projection 29 is arranged so as to abut on the surface opposite the side where the insertion member 25 is inserted in the second member 13. A punch 32 is pressed against the head 21 of the insertion member 25 and the shaft 23 of the insertion member 25 is driven into the second member 13. As a result, a portion 14 of the second member 13 corresponding to the shaft 23 of the insertion member 25 is punched out by shear between the shaft 23 and the counterpunch 31.

The insertion member 25 is pressed toward the second member 13 by a punch 32, and therefore, a part of the second member 13 sandwiched between the head 21 and the counterpunch 31 plastically flows and is pushed into the ring-shaped grove 27 formed around the shaft 23 of the head 21. As a result, the insertion member 25 is caulked and fixed to the second member 13.

According to the joint structure using the insertion member 25, a part of the second member 13 plastically flows and is caulked and fixed to the ring-shaped groove 27 formed in the head 21. As a result, fixing strength between the insertion member 25 and the second member 13 is increased, and unstable anchoring of the insertion member 25 and dropout thereof during transportation and during execution can be prevented.

(Second modification example)

FIG. 5 is a cross-sectional view of an insertion member 35 of a second modification example in which the insertion tip of the shaft 23 has been buckled and fixed to the second member 13.

The insertion member 35 having the head 21 and the shaft 23 may have a constitution that the insertion tip of the shaft 23 has been buckled and a plastic deformation part 33 having a diameter larger than the diameter of the shaft 23 has been formed.

According to the joint structure using the insertion member 35, the insertion member 35 is fixed in the state that the second member 13 has held by the head 21 from the front and the back and the plastic deformation part 33, and therefore, fixing strength between the insertion member 35 and the second member 13 is further increased. Furthermore, unstable anchoring of the insertion member 35 and dropout thereof during transportation and during execution can be further surely prevented.

(Third modification example)

The insertion members 15, 25 and 35 described above each have the constitution having the head 21, but may have a constitution not having a head.

(A) to (C) of FIG. 6 are cross-sectional views of various insertion members not having a head. An insertion member 37 shown in (A) of FIG. 6 has a constitution having only the columnar shaft 23 from which the head 21 has been omitted. The insertion member 37 does not have the head 21 and a shaft diameter is constant from the head 21 to the insertion tip.

An insertion member 41 shown in (B) of FIG. 6 has a constitution in which threads 39 have been provided on the outer periphery of the columnar shaft 23. The insertion member 41 does not have the head 21, a shaft diameter is constant from one edge in a shaft direction to the other edge in the shaft direction and the threads 39 are formed on the entire outer periphery of the shaft 23. The kind, the number and the formation range of the threads 39 are not particularly limited, and the threads may be non-standard threads.

An insertion member 43 shown in (C) of FIG. 6 has a constitution in which a dimeter of only one edge side in the axis direction of the shaft 23 is increased. The insertion member 43 does not have the head 21 and the diameter of the shaft 23 increases toward an insertion tip 43a.

The insertion members 37, 41 and 43 described above each are used by driving into the second member 13. As one example, FIG. 7 shows the state that the insertion member 41 shown in (B) of FIG. 6 has been fixed to the second member 13. According to the joint structure using the insertion member 41, the insertion member 41 is driven into the second member 13, and as a result, a part of a steel member of the second member 13 plastically flows in the threads 39 of the insertion member 41. As a result, the insertion member 41 is caulked and fixed to the second member 13.

Thus, even in any insertion part, the insertion member 41 and the second member 13 are strongly fixed to each other. As a result, the insertion member 41 can be surely prevented from dropout during transportation and joining of the member, and the insertion member 41 can be prevented from unstable anchoring.

In the fixation method of each insertion member described above, other methods, such as the above-described driving, fixation by press such as press fitting (fitting) in a lower hole previously formed, or caulking by rivet deformation during welding, can be used.

A diameter of the shaft of each insertion member is not particularly limited. However, when a diameter d of the shaft 23 is too small as compared with a diameter D of the welded part 19 as shown in FIG. 1, the effect of dilution during melting is difficult to be obtained. Therefore, it is preferred to satisfy the relationship of $d/D \geq 1/4$, and is more preferred to satisfy the relationship of $d/D \geq 1/2$. A shaft length of the insertion member is determined by appropriately selecting depending on a thickness of the high tensile strength member.

As the fixation method of each insertion member, when the insertion member 15 is driven in the second member 13 to punch out the second member 13, the diameter d of the shaft 23 of the insertion member 15 and a thickness $t_2$ of the second member 13 preferably satisfy the following relationship (5).

$$d \geq 3.3t_2 \ ... \ (5)$$

In a case where the insertion member 15 is inserted in the second member 13 by driving the insertion member 15 therein, when the diameter d of the shaft 23 of the insertion member 15 is smaller than the predetermined value as compared with the thickness $t_2$ of the second member 13, that is, the diameter d is too small as compared with the thickness $t_2$ of the second member 13, the insertion member 15 is buckled during driving the insertion member 15 and the second member 13 may not be punched out.

The upper limit of the shaft diameter d is not particularly limited. However, a target nugget diameter is determined by a thickness of a sheet or plate to be welded in spot welding, as defined in JIS standard. Therefore, from the standpoint of obtaining satisfactory joint strength, when a thickness of the thinner member between a thickness $t_1$ of the first member 11 and a thickness $t_2$ of the second member 13 is $t_{min}$ (when the members to be welded are three or more, the minimum thickness of those), the diameter d preferably satisfies the following relationship (6).

$$d \leq 7\sqrt{t_{min}} \ ... \ (6)$$

When the insertion member 15 is driven in the second member 13 for the same reason as above, the shaft 23 of the insertion member 15 preferably has Vickers hardness of 140 Hv or more. The Vickers hardness of the shaft 23 in the present invention is determined by an average value of each Vickers hardness measured from any three positions in a lower half area of a length of the shaft 23 (length in an upper-lower direction of the shaft in (A) of FIG.3).

A diameter and thickness of the head of the insertion member having the head 21 are not particularly limited. The diameter and thickness of the head are determined by appropriately selecting design conditions such as necessary strength and stiffness of an applied member such as automobile member and welding conditions during assembling.

The timing of inserting the insertion member in the second member is not particularly limited so long as the insertion member is inserted before the formation of the welded part between the insertion member and the first member. For example, when the second member is applied to an automobile member, the insertion member may be inserted in the second member after forming the second member into a shape for an automobile member by cold rolling. Alternatively, the second member may be formed into a shape for an automobile member by, for example, hot stamping (hot press) after inserting the insertion member in the second member in the state that the second member is a steel sheet.

<Welded part>

The welded part 19 is described below.

The welded part 19 is formed by spot welding, but the present invention is not limited to this. The welded part 19 can be formed using the conventional welding methods such as laser welding, plasma arc welding or resistance welding. Welding conditions are determined by appropriately selecting depending on design conditions such as required strength and stiffness. For example, when spot welding is performed, the welded part 19 may be formed using two-step electric current supply conditions that change applied current value in two steps, pulse electric supply conditions that apply pulse current, or the like. In that case, energy amount to be applied to the welded part 19 can be set with high precision, and a temperature, a size and the like of the welded part 19 can be finely set.

In the spot welding, a material to be welded is pressed with an electrode during welding. Therefore, the welding can be carried out with high quality regardless of welding posture. Furthermore, in this technology, the conventional mass-production spot welding facilities of mild steel and the like can be directly used, and special apparatus or control for a high tensile strength steel are not required. Furthermore, the amount of components in the steel of the welded part can be easily changed by appropriately selecting a material of the insertion member. Additionally, the first member 11 and the second member 13 are fixed to each other by spot welding between the insertion member and the first member 11, and therefore, restriction in a material of the second member 13 is small. As a result, the degree of freedom of material selection of the second member 13 is increased.

(Other example of welded part)

FIG. 8 is a cross-sectional view of the welded part formed in the joint structure in another example. The dot line in the drawing shows the state before the formation of the welded part 19.

The welded part 19 in this case is formed over the portion between an insertion tip 23a of the shaft 23 of the insertion member 37 into the second member 13 and a superposition surface 11a between the first member 11 and the shaft 23, a part between an outer circumferential surface 37a of the shaft 23 of the insertion member 37 and an inner circumferential surface 13a of the second member 13, and a part of a contact surface 51 between the first member 11 and the second member 13, that is an outer diameter side of the superposition 11a between the insertion tip 23a of the shaft 23 of the insertion member 37 and the first member 11.

In other words, the welded part 19 is formed by melting a part of each of the first member 11, the insertion member 37 and the second member 13.

From the standpoint of fixing the insertion member 37 to the second member 13, the shaft 23 of the insertion member 37 is preferably joined with the second member 13, as shown in FIG. 8. Even in this case, the insertion member 37 dilutes components in the steel of the first member 11 and second member 13 in the welded part 19 formed. Therefore, the carbon equivalent of the welded part 19 is lower than the carbon equivalent when the first member 11 and the second member 13 are joined to each other.

Hardness of each welded part 19 described above is not particularly limited. However, when Vickers hardness of the welded part 19 is too high, toughness is low and satisfactory peel strength is not obtained. For this reason, the Vickers hardness of the welded part 19 is desirably 500 Hv or less and more preferably 420 Hz or less.

<Second constitution example of joint structure>

The second constitution example of the joint structure is described below. In this constitution, the first member 11 and the second member 13 are joined to each other by a pair of the insertion members.

FIG. 9 is a cross-sectional view of a joint structure 200 of the second constitution example in which the welded part 19 has been formed between an insertion tip of a first insertion member 15A and an insertion tip of a second insertion member 15B.

The joint structure 200 of this constitution includes the first member 11, the second member 13 superposed on the first member 11, the first insertion member 15A, the second insertion member 15B and the welded part 19.

Each of the first member 11 and the second member 13 is constituted of a high tensile strength steel member and may have a multilayered structure having a plurality of members superposed on the high tensile strength steel. The first insertion member 15A is held by the second member 13 in the state of having been inserted toward a superposition surface 12 between the first member 11 and the second member 13 from a surface 16 of the second member 13 opposite the superposition surface 12 in the superposition part. Furthermore, in the superposition part between the first member 11 and the second member 13, the second insertion member 15B is held by the first insertion member 11 in the state of having been inserted toward the superposition surface 12 between the first member 11 and the second member 13 from a surface 18 of the first member 11 opposite the superposition surface 12 in the superposition part. As a result, the state is obtained such that the shafts 23, 23 have been inserted in the first member 11 and the second member 13, respectively.

The welded part 19 is a joint part in which the insertion tip of the shaft 23 of the first insertion member 15A into the second member 13 and the insertion tip of the shaft 23 of the second insertion member 15B into the first member 11 have been melted. The welded part 19 tightly joins the first insertion member 15A and the second insertion member 15B. As a result, the first member 11 and the second member 13 are sandwiched between the head 21 of the first insertion member 15A and the head 21 of the second insertion member 15B and are fixed to each other.

In the joint structure 200 of the above constitution, the carbon equivalent Ceq (M1) of the first member 11 defined by the formula (1), the carbon equivalent Ceq (M2) of the second member 13, the carbon equivalent Ceq (N1) of the first insertion member 15A and the carbon equivalent Ceq (N2) of the second insertion member 15B satisfy the following relationship (4).

$$\text{Ceq (M1)+Ceq (M2)} \geq \text{Ceq (N1)+Ceq (N2) ... (4)}$$

Similar to the case shown in FIG. 8, the welded part 19 of the joint structure 200 may be formed between an outer circumferential surface of the shaft 23 of the first insertion member 15A and the second member 13, between an outer circumferential surface of the shaft 23 of the second insertion member 15B and the first member 11, and over at least a part of the superposition surface between the first member 11 and the second member 13.

According to the joint structure 200 shown in FIG. 9, the welded part 19 having a carbon equivalent lower than that of the first member 11 and second member 13 is formed in the insertion tips of the first insertion member 15A and second insertion member 15B. Therefore, the joint structure having excellent toughness and satisfactory peel strength is obtained. Furthermore, further strong joint structure can be formed by pinching the first member 11 and the second member 13 by the head 21 of the first insertion member 15A and the head 21 of the second insertion member 15B.

In the joint structure 200 of this constitution, at least any one of the insertion members may be a high strength member having a high carbon equivalent (for example, a high tensile strength steel member). In this case, the welded part 19 is diluted with other insertion member and the carbon equivalent of the welded part 19 is lower than the carbon equivalent of the first member 11 and carbon equivalent of the second member 13. As a result, toughness of the joint structure 200 is improved and joint strength is satisfactory.

As described above, in the joint structure 200 of this constitution, the welded part 19 having excellent toughness can be formed, and satisfactory peel strength is obtained. In addition to this, in the joint structure 200, the first insertion member 15A and the second insertion member 15B each have the head 21, and as a result, the thickness of the welded part 19 can be increased in a thickness direction and joint strength is further enhanced.

Similar to the case as described above, when the second insertion member 15B is driven in the first member 11 and the first insertion member 15A is driven in the second member 13 as the fixing method of each insertion member, as shown in FIG. 9, a diameter $d_1$ of the shaft 23 of the first insertion member 15A and a thickness $t_2$ of the second member 13 preferably satisfy the following relationship (7) and similarly a diameter $d_2$ of the shaft 23 of the second insertion member 15B and a thickness $t_1$ of the first member 11 preferably satisfy the following relationship (8).

$$d_1 \geq 3.3t_2 ... (7)$$

$$d_2 \geq 3.3t_1 ... (8)$$

<Third constitution example of joint structure>

A third constitution example of the joint structure is described below. In this constitution, the insertion member is inserted without penetrating through the second member.

(A) of FIG. 10 is a cross-sectional view of a joint structure before joint in which the insertion member has been inserted without penetrating through the second member 13, and (B) of FIG. 10 is a cross-sectional view of a joint structure in which the insertion member of (A) of FIG. 10 has been melted together with the first member 11 and the second member 13 and joined thereto.

In the joint structure 300 of this constitution, the insertion 37 is inserted in the middle in a thickness direction of the second member 13 and is held in the insertion state, before joint. The welded part 19 is formed in the state that the second member 13 having the insertion member 37 provided therein has been superposed on the first member 11.

In this case, the insertion member 37 may have or may not have a head. When the insertion member does not have the head, the second member 13 can have the constitution that the second member 13 does not project in a thickness direction in the state that the insertion member 37 has been inserted therein. As a result, handling property of the second member 13 is improved and weldability can be enhanced.

Even in this joint structure 300, the carbon equivalent Ceq (N1) of the insertion member 37 is lower than the carbon equivalent Ceq (M2) of the second member 13. Therefore, the insertion member 37 dilutes the welded part 19 during welding, and the carbon equivalent thereof is decreased as compared with the carbon equivalent of the first member 11 and the second member 13. As a result, the welded part 19 having excellent joint toughness can be formed and satisfactory joint strength is obtained.

According to the joint structure having the constitution and the method for manufacturing a joint structure as described above, toughness of the welded part is improved and joint strength can be enhanced by merely decreasing the carbon equivalent of the insertion member than that of the second member without restricting welding conditions.

The present invention is not limited to the embodiments described above, and combinations of each constitution of the embodiments and modifications and applications by one skilled in the art based on the description and the conventional technologies are intended in the present invention and are included in the scope claimed in the present invention

Examples

In Examples 1 to 11, any one of insertion members α, β and γ shown in Table 2 was allowed to penetrate through each of steel sheets A, B and C shown in Table 1 using a press apparats and caulked and fixed. In Examples 1 to 7, 9 and 11 shown in Table 3, the penetration of the insertion member against a steel sheet was conducted by driving the insertion member in a steel sheet not having a through hole and punching out the steel sheet. In Examples 8 and 10, the penetration was conducted by fitting (press-fitting) the insertion member having a diameter smaller than a diameter of a lower hole to a steel sheet having the lower hole (through hole) previously formed therein. The steel sheet having the insertion member fixed thereto and a steel sheet as a counterpart material were superposed each other and welded under the conditions shown in Table 3 based on a cross tension testing method (JIS Z3137: the description of JIS standard of a cross tension testing method is hereinafter omitted) to prepare a cross tension test piece. Regarding a material of the insertion member, the insertion members α and γ used SS400 material (rolled sheets for general structure, JIS G3101: 2004), and the insertion member β used SS300 material (rolled sheets for general structure, JIS G3101: 2004). The insertion members used each had a shaft diameter of 4 to 9 mm. Two kinds of the insertion members, one having a head and the other not having a head, were used.

The shaft diameter of the insertion member was constant from a head side to an insertion tip. Lap welding was conducted by spot welding under the following one-step electric current supply conditions and two-step electric current supply conditions using a direct current inverter type welding machine.

(One-step electric current supply conditions)

Current: 7kA

Current supply time: 300 ms

(Two-step electric current supply conditions)

Current in first step: 7kA
Current supply time in first step: 300 ms
Cooling time (cooling time provided between first current supply and second current supply): 1000 ms
Current in second step: 5kA
Current supply time in second step: 300 ms

The joint obtained by spot welding was subjected to a cross tension test based on the above cross tension testing method, and cross tension strength (CTS) and fracture form were investigated. Furthermore, the welding was evaluated from the results of the cross tension test. In the welding evaluation, as compared with the case of not using the insertion member, out of the conditions in which the cross tension strength was improved, when plug fracture generated in the vicinity of the circumference of a molten nugget, partially in a nugget or in a base plate, the case was evaluated as "I", and the case of partial plug fracture other than the above or fracture form such as interfacial fracture was evaluated as "II".

Table 1

| Kind of steel | Thickness (mm) | Tensile strength (MPa) | C (%) | Si (%) | Mn (%) | P (%) | S (%) | Ceq* |
|---|---|---|---|---|---|---|---|---|
| A | 1.2 | 980 | 0.13 | 1.50 | 2.00 | 0.010 | 0.001 | 0.30 |
| B | 1.2 | 1180 | 0.20 | 1.50 | 2.00 | 0.010 | 0.001 | 0.37 |
| C | 1.2 | 590 | 0.45 | 0.20 | 0.80 | 0.030 | 0.003 | 0.57 |
| *Ceq = C+Si/30+Mn/20+2P+4S | | | | | | | | |

Table 2

| Kind of steel | Vickers hardness (Hv) | C (%) | Si (%) | Mn (%) | P (%) | S (%) | Ceq* |
|---|---|---|---|---|---|---|---|
| α | 150 | 0.06 | 0.04 | 0.40 | 0.010 | 0.001 | 0.10 |
| β | 120 | 0.002 | 0.04 | 0.40 | 0.020 | 0.015 | 0.12 |
| γ | 200 | 0.10 | 0.04 | 0.40 | 0.020 | 0.015 | 0.22 |
| *Ceq = C+Si/30+Mn/20+2P+4S | | | | | | | |

Table 3

| | Sheet assembly | | Insertion member | | Head | Shaft diameter (mm) | Insertion method | Welding method | Nugget diameter (mm) | CTS (kN) | Fracture form | Evaluation of welding |
|---|---|---|---|---|---|---|---|---|---|---|---|---|
| | Upper sheet | Lower sheet | Upper sheet | Lower sheet | | | | | | | | |
| Ex. 1 | B | B | α | None | Present | φ4 | Driving | Spot welding (one-step current supply) | 5.2 | 6.9 | Plug fracture | I |
| Ex. 2 | B | B | α | None | Present | φ4 | Driving | Spot welding (one-step current supply) | 6.0 | 7.2 | Plug fracture | I |
| Ex. 3 | B | B | α | None | Present | φ6 | Driving | Spot welding (one-step current supply) | 5.7 | 6.6 | Partial plug fracture | II |
| Ex. 4 | B | B | α | None | Present | φ9 | Driving | Spot welding (one-step current supply) | 5.4 | 6.9 | Partial plug fracture | II |
| Ex. 5 | B | B | α | None | Present | φ4 | Driving | Spot welding (two-step current supply) | 6.0 | 8.1 | Plug fracture | I |
| Ex. 6 | B | B | α | None | None | φ4 | Driving | Spot welding (one-step current supply) | 5.2 | 4.9 | Plug fracture | I |
| Ex. 7 | A | B | α | None | Present | φ9 | Driving | Spot welding (one-step current supply) | 5.8 | 5.6 | Partial plug fracture | II |
| Comp. Ex. 1 | B | B | None | None | - | - | - | Spot welding (one-step current supply) | 5.3 | 3.8 | Partial plug fracture | - |
| Comp. Ex. 2 | B | B | None | None | - | - | - | Spot welding (one-step current supply) | 5.9 | 5.4 | Partial plug fracture | - |

EP 3 459 671 A1

15

| | Sheet assembly | | Insertion member | | Head | Shaft diameter (mm) | Insertion method | Welding method | Nugget diameter (mm) | CTS (kN) | Fracture form | Evaluation of welding |
|---|---|---|---|---|---|---|---|---|---|---|---|---|
| | Upper sheet | Lower sheet | Upper sheet | Lower sheet | | | | | | | | |
| Comp. Ex. 3 | A | B | None | None | - | - | - | Spot welding (one-step current supply) | 5.9 | 5.4 | Partial plug fracture | - |
| Ex. 8 | B | B | β | None | Present | φ4 | Lower hole + fitting | Spot welding (one-step current supply) | 6.0 | 7.3 | Plug fracture | I |
| Ex. 9 | B | B | γ | None | Present | φ4 | Driving | Spot welding (one-step current supply) | 5.9 | 7.2 | Plug fracture | I |
| Ex. 10 | C | C | β | None | Present | φ4 | Lower hole + fitting | Spot welding (one-step current supply) | 6.0 | 1.5 | Partial plug fracture | II |
| Ex. 11 | C | C | γ | γ | Present | φ4 | Driving | Spot welding (one-step current supply) | 6.0 | 6.8 | Plug fracture | I |
| Camp. Ex. 4 | C | C | None | None | - | - | - | Spot welding (one-step current supply) | 6.0 | 1.2 | Partial plug fracture | - |

EP 3 459 671 A1

In Examples 1 to 5 and 8 to 11 of Examples 1 to 11 shown in Table 3, the insertion member having the head in the upper sheet was caulked and fixed to the sheet assembly of the same two materials, and the welded part was formed between the insertion tip of the insertion member and the lower sheet.

In Example 6, the insertion member not having the head was caulked and fixed to the upper sheet of the sheet assembly of the same two materials, and the welded part was formed between the insertion tip of the insertion member and the lower sheet.

In Example 7, the insertion member having the head was driven in the sheet assembly of two steel sheets having different strength, and the welded part was formed between the insertion member and lower sheet.

In Comparative Examples 1 to 4, the welded part was formed between the members by the conventional spot welding method that does not use an insertion member.

As shown in the results of Table 3, it was found that the cross tension strength is improved by using an insertion member even in all sheet assemblies and welding conditions. Furthermore, in Examples 1, 2, 5, 6, 8, 9 and 11, plug fracture occurred and the form of fracture was improved. In Example 5, the cross tension strength was further improved by using two-step electric current supply, as compared with the one-step electric current supply conditions.

Comparing Examples with Comparative Examples in detail, for example, it is found from the comparison between Example 1 and Comparative Example 1 which are the same test conditions that the cross tension strength (CTS) of Example 1 having the insertion member is greatly improved (3.8 kN → 6.9 kN) as compared with that of Comparative Example 1 not having the insertion member. Similarly, it is found from the comparison between Example 2 and Comparative Example 2 that CTS is increased from 5.4 kN to 7.2 kN; it is found from the comparison between Example 6 and Comparative Example 1 that CTS is increased from 3.8 kN to 4.9 kN; it is found from the comparison between Example 7 and Comparative Example 3 that CTS is increased from 5.4 kN to 5.6 kN; and it is found from the comparison between Example 10 and Comparative Example 4 that CTS is increased from 1.2 kN to 1.5 kN.

Base on the cross tension test method, three sheets of the steel B were laminated and spot welding was conducted to prepare a cross tension test piece. The spot welding was conducted under the conditions of current: 7kA and current supply time: 300 ms using a direct inverter type welding machine. The joint thus obtained was subjected to the cross tension test based on the cross tension test method, and joint strength was evaluated.

In evaluating the joint strength, in order to evaluate the strength between the upper sheet and the intermediate sheet, two sheets of the intermediate sheet and the lower sheet were laminated, and the upper sheet was crossed and laminated on the laminated two sheets to prepare a test piece. The welding was evaluated from the results of the cross tension test. In the welding evaluation, as compared with the case of not using the insertion member, out of the conditions in which the cross tension strength was improved, the case of plug fracture was evaluated as "I", and the case of partial plug fracture other than the above or fracture form such as interfacial fracture was evaluated as "II".

Table 4

| | Insertion member | | Head | Shaft diameter (mm) | Welding method | Nugget diameter (mm) | | CTS (kN) | Fracture form | Evaluation of welding |
| | Upper sheet | Lower sheet | | | | Between upper sheet and intermediate sheet | Between intermediate sheet and lower sheet | | | |
|---|---|---|---|---|---|---|---|---|---|---|
| Ex. 12 | Present | None | Present | φ4 | Spot welding (One-step current supply) | 6.3 | 6.3 | 9.0 | Partial plug fracture | I |
| Comp. Ex. 5 | None | None | - | - | Spot welding (One-step current supply) | 6.3 | 6.3 | 4.9 | Partial plug fracture | - |

In Example 12 shown in Table 4, the insertion member having the head was caulked and fixed to the sheet assembly of the same two materials, and the welded part was formed between the insertion member and the intermediate sheet and between the insertion sheet and the lower sheet. In Comparative Example 5, the welded part was formed between the upper sheet and the lower sheet by the conventional spot welding method, without using the insertion member.

As shown in the results of Table 4, it was found that the cross tension strength is improved even in an assembly of three sheets by using the insertion member.

As described above, the present description discloses the followings.

(1) A joint structure comprising:

a first member comprising a high tensile strength steel;
a second member comprising a high tensile strength steel and superposed on the first member:

a steel insertion member held by the second member in a state of having been inserted toward a superposition surface between the first member and the second member from a surface of the second member opposite the superposition surface; and
a welded part formed on an insertion tip of the insertion member by melting the insertion member and the first member,
wherein a carbon equivalent Ceq of the insertion member is lower than a carbon equivalent Ceq of the second member, provided that the carbon equivalent Ceq is a value defined by the following formula (1):

$$Ceq = C+Si/30+Mn/20+2P+4S \ ... \ (1)$$

wherein C, Si, Mn, P and S each represent a content (mass %) of each element, and when the element is not contained, the content thereof is 0.

According to this joint structure, the insertion member having a carbon equivalent Ceq lower than that of the second member is used and the insertion member is welded to the first member. As a result, the components in the steel of the welded part are diluted and the carbon equivalent is decreased. Then, the carbon equivalent of the welded part is lower than that in the case of forming the welded part between the first member and the second member. As a result, toughness of the welded part is improved and excellent joint structure having satisfactory joint strength is obtained. Furthermore, the joint structure is held in the state that the insertion member as a solid has been inserted in the second member. As a result, the insertion member with a proper volume necessary for the dilution is arranged in the welded part. As a result, the dilution of the welded part can be efficiently conducted regardless of welding posture.

(2) A joint structure comprising:

a first member comprising a high tensile strength steel;
a second member comprising a high tensile strength steel and superposed on the first member;
a pair of steel insertion members held by the first member and the second member, respectively, in a state of having been inserted toward a superposition surface between the first member and the second member from each surface of the first member and the second member opposite the superposition surface, and
a welded part formed on insertion tips of the pair of the insertion members by melting the insertion members each other,
wherein a carbon equivalent Ceq (M1) of the first member, a carbon equivalent Ceq (M2) of the second member, a carbon equivalent Ceq (N1) of the insertion member inserted in the second member and a carbon content Ceq (N2) of the insertion member inserted in the first member satisfy the following relationships (1) and (2):

$$Ceq = C+Si/30+Mn/20+2P+4S \ ... \ (1)$$

wherein C, Si, Mn, P and S each represent a content (mass %) of each element, and when the element is not contained, the content thereof is 0; and

$$\text{Ceq (M1)+Ceq (M2)} \geq \text{Ceq (N1)+Ceq (N2)} ... (2).$$

According to this joint structure, the insertion members having a carbon equivalent Ceq lower than that of the first and second members are used and the insertion members are welded to each other. As a result, the components in the steel of the welded part are diluted and the carbon equivalent is decreased. Then, the carbon equivalent of the welded part is lower than that in the case of forming the welded part between the first member and the second member. As a result, toughness of the welded part is improved and excellent joint structure having satisfactory joint strength is obtained. Furthermore, the joint structure is held in the state that the insertion member as a solid has been inserted in the second member. As a result, the insertion member with a proper volume necessary for the dilution is arranged in the welded part. As a result, the dilution of the welded part can be efficiently conducted regardless of welding posture.

(3) The joint structure according to (1) or (2), wherein the insertion member has a shaft and a head having a diameter larger than that of the shaft, one end of the shaft is the insertion tip and the other end of the shaft has the head formed thereon.

According to this joint structure, the insertion member has the head and the shaft. As a result, the thickness of the head of the insertion member connecting to the welded part can be partially increased. This can enhance peel strength of the joint structure and further improve joint strength.

(4) The joint structure according to (3), wherein the shaft is arranged so as to penetrate through a member which is the first member or the second member and in which the insertion member is inserted.

According to this joint structure, the shaft of the insertion member is arranged so as to penetrate through the member in which the insertion member is inserted. As a result, melting of the insertion tip of the insertion member is accelerated and the effect of diluting the welded part is improved.

(5) The joint structure according to (3) or (4), wherein the head and/or shaft of the insertion member is caulked to a member which is the first member or the second member and in which the insertion member is inserted.

According to this joint structure, the insertion member is caulked and fixed to the member in which the insertion member is inserted. As a result, fixing strength of the insertion member is further increased and unstable anchoring of the insertion member can be prevented. Furthermore, the insertion member as a solid is inserted in the second member. As a result, the insertion member with a proper volume necessary for the dilution is arranged in the welded part. As a result, the dilution of the welded part can be efficiently conducted regardless of welding posture.

(6) The joint structure according to any one of (3) to (5), wherein

a member which is the first member or the second member and in which the insertion member is inserted holds the insertion member in a state of having been punched out by the insertion member, and

a diameter d of the shaft and a thickness t of the member in which the insertion member is inserted satisfy the following relationship (3):

$$d \geq 3.3t ... (3)$$

According to this joint structure, when the insertion member is inserted by driving it in the first member or the second member, the diameter d of the shaft of the insertion member is equal to or more than a predetermined value as compared with the thickness t of the first member or second member in which the insertion member is inserted. As a result, the insertion member can be prevented from buckling when driving the insertion member in the first or second member and the first member or the second member can be effectively punched out.

(7) The joint structure according to any one of (3) to (6), wherein the shaft has Vickers hardness of 140 Hv or more.

According to this joint structure, similar to the above case, the insertion member can be prevented from buckling when driving the insertion member and the first member or the second member can be effectively punched out.

(8) A method for manufacturing a joint structure by joining a first member comprising a high tensile strength steel and a second member comprising a high tensile strength steel, the method comprising:

a step of inserting a steel insertion member into the second member and holding it; and
a step of superposing the second member on the first member and forming a welded part of the insertion member and the first member in an insertion tip of the insertion member,
wherein a carbon equivalent Ceq of the insertion member is lower than a carbon equivalent Ceq of the second member, provided that the carbon equivalent Ceq is a value defined by the following formula (1):

$$Ceq = C+Si/30+Mn/20+2P+4S \qquad ... (1)$$

wherein C, Si, Mn, P and S each represent a content (mass %) of each element, and when the element is not contained, the content thereof is 0.

According to this method for manufacturing a joint structure, the insertion member having a carbon equivalent Ceq lower than that of the second member and the insertion member is welded to the first member. As a result, the components in the steel of the welded part are diluted and the carbon equivalent is reduced. Then, the carbon equivalent of the welded part is lower than that in the case of forming the welded part between the first member and the second member. As a result, toughness of the welded part is improved and excellent joint structure having satisfactory joint strength is obtained. Furthermore, the joint structure is held in the state that the insertion member as a solid has been inserted in the second member. As a result, the insertion member with a proper volume necessary for the dilution is arranged in the welded part. As a result, the dilution of the welded part can be efficiently conducted regardless of welding posture.

(9) A method for manufacturing a joint structure by joining a first member comprising a high tensile strength steel and a second member comprising a high tensile strength steel, the method comprising:

a step of inserting steel insertion members into the first member and the second member, respectively, and holding them; and

a step of superposing the second member on the first member so that the insertion members face each other, and forming a welded part of these insertion members in insertion tips of the insertion members,

wherein a carbon equivalent Ceq (M1) of first member, a carbon equivalent Ceq (M2) of the second member, a carbon equivalent Ceq (N1) of the insertion member inserted in the second member and a carbon content Ceq (N2) of the insertion member inserted in the first member satisfy the following relationships (1) and (2):

$$Ceq = C+Si/30+Mn/20+2P+4S \qquad ... (1)$$

wherein C, Si, Mn, P and S each represent a content (mass %) of each element, and when the element is not contained, the content thereof is 0; and

$$Ceq\,(M1)+Ceq\,(M2) \geq Ceq\,(N1)+Ceq\,(N2) \,... \,(2).$$

According to this method for manufacturing a joint structure, the insertion members having a carbon equivalent Ceq lower than those of the first and second members are used and the insertion members are welded to each other. As a result, the components in the steel of the welded part are diluted and the carbon equivalent is decreased. Then, the carbon equivalent of the welded part is lower than that in the case of forming the welded part between the first member and the second member. As a result, toughness of the welded part is improved and excellent joint structure having satisfactory joint strength is obtained. Furthermore, the joint structure is held in the state that the insertion member as a solid has been inserted in the second member. As a result, the insertion member with a proper volume necessary for the dilution is arranged in the welded part. As a result, the dilution of the welded part can be efficiently conducted regardless of welding posture.

(10) The method for manufacturing a joint structure according to (8), wherein the insertion member has a shaft and a head having a diameter larger than that of the shaft, and the insertion member is welded to the first member with the head being left on the surface of the second member.

According to this method for manufacturing a joint structure, the insertion member is welded to the first member with the head of the insertion member being left on the surface of the second member. As a result, the second member can be fixed in the state of sandwiching it between the first member and the head. As a result, joint strength of the joint structure is enhanced and joint strength is further improved.

(11) The method for manufacturing a joint structure according to (9), wherein each of the insertion members has a shaft and a head having a diameter larger than that of the shaft, and the insertion members are welded to each other with the heads being left on the surfaces of the first member and the second member, respectively.

According to this method for manufacturing a joint structure, the insertion members are welded to each other with the heads of the insertion members being left on the surfaces of the first member and the second member, respectively. As a result, the first member and the second member can be fixed in the state of sandwiching them between a pair of the heads. As a result, joint strength of the joint structure is enhanced and joint strength is further improved.

(12) The method for manufacturing a joint structure according to (10) or (11), wherein the shaft of the insertion member is allowed to penetrate through a member which is the first member or the second member and in which the insertion member is inserted.

According to this method for manufacturing a joint structure, the shaft of the insertion member is arranged by penetrating through the member in which the insertion member is inserted. As a result, the insertion of the insertion member is easily conducted by driving or the like.

(13) The method for manufacturing a joint structure according to any one of (10) to (12), wherein the head of the insertion member is caulked to a member which is the first member or the second member and in which the insertion member is inserted.

According to this method for manufacturing a joint structure, the insertion member is caulked and fixed to the member in which the insertion member is inserted. As a result, fixing strength of the insertion member is further increased and unstable anchoring of the insertion member can be prevented. Furthermore, the insertion member as a solid is inserted in the second member. As a result, the insertion member with a proper volume necessary for the dilution is arranged in the welded part. As a result, the dilution of the welded part can be efficiently conducted regardless of welding posture.

(14) The method for manufacturing a joint structure according to any one of (10) to (13), wherein in the step of inserting the insertion member into the first member or the second member and holding it, the insertion member is held by driving it in the first member or the second member, and

a diameter d of the shaft and a thickness t of the member in which the insertion member is inserted satisfy the following relationship (3):

$$d \geq 3.3t \ ... \ (3).$$

According to this method for manufacturing a joint structure, when the insertion member is inserted by driving it in the first member or the second member, the diameter d of the shaft of the insertion member is equal to or more than a predetermined value as compared with the thickness t of the first member or the second member in which the insertion member is inserted. As a result, the insertion member can be prevented from buckling when driving the insertion member in the first or second member and the first member or the second member can be effectively punched out.

(15) The method for manufacturing a joint structure according to any one of (10) to (14), wherein the shaft has Vickers hardness of 140 Hv or more.

According to this method form manufacturing a joint structure, similar to the above case, the insertion member can be prevented from buckling when driving the insertion member and the first member or the second member can be effectively punched out.

While the present invention has been described in detail and with reference to specific embodiments thereof, it will be apparent to one skilled in the art that various changes and modifications can be made therein without departing from the spirit and scope thereof. This application is based on Japanese Patent Application No. 2016-101294 filed on May 20, 2016 and Japanese Patent Application No. 2017-074691 filed on April 4, 2017, the entire subject matters of which are incorporated herein by reference.

Description of Reference Numerals and Signs

| 11 | First member |
| 13 | Second member |
| 15, 25, 35, 37, 41 and 43 | Insertion member |
| 15A and 15B | Insertion member |
| 19 | Welded part |
| 21 | Head |
| 23 | Shaft |
| 100, 200 and 300 | Joint structure |

**Claims**

1. A joint structure comprising:

   a first member comprising a high tensile strength steel;
   a second member comprising a high tensile strength steel and superposed on the first member:

   a steel insertion member held by the second member in a state of having been inserted toward a superposition surface between the first member and the second member from a surface of the second member opposite the superposition surface; and
   a welded part formed on an insertion tip of the insertion member by melting the insertion member and the first member,
   wherein a carbon equivalent Ceq of the insertion member is lower than a carbon equivalent Ceq of the second member, provided that the carbon equivalent Ceq is a value defined by the following formula (1):

   $$Ceq = C + Si/30 + Mn/20 + 2P + 4S \dots (1)$$

   wherein C, Si, Mn, P and S each represent a content (mass %) of each element, and when the element is not contained, the content thereof is 0.

2. A joint structure comprising:

   a first member comprising a high tensile strength steel;
   a second member comprising a high tensile strength steel and superposed on the first member;
   a pair of steel insertion members held by the first member and the second member, respectively, in a state of having been inserted toward a superposition surface between the first member and the second member from each surface of the first member and the second member opposite the superposition surface, and
   a welded part formed on insertion tips of the pair of the insertion members by melting the insertion members each other,
   wherein a carbon equivalent Ceq (M1) of the first member, a carbon equivalent Ceq (M2) of the second member, a carbon equivalent Ceq (N1) of the insertion member inserted in the second member and a carbon content Ceq (N2) of the insertion member inserted in the first member satisfy the following relationships (1) and (2):

   $$Ceq = C + Si/30 + Mn/20 + 2P + 4S \dots (1)$$

   wherein C, Si, Mn, P and S each represent a content (mass %) of each element, and when the element is not contained, the content thereof is 0; and

   $$Ceq\ (M1) + Ceq\ (M2) \geq Ceq\ (N1) + Ceq\ (N2) \dots (2).$$

3. The joint structure according to claim 1 or 2, wherein the insertion member has a shaft and a head having a diameter larger than that of the shaft, one end of the shaft is the insertion tip and the other end of the shaft has the head formed thereon.

4. The joint structure according to claim 3, wherein the shaft is arranged so as to penetrate through a member which is the first member or the second member and in which the insertion member is inserted.

5. The joint structure according to claim 3, wherein the head and/or shaft of the insertion member is caulked to a member which is the first member or the second member and in which the insertion member is inserted.

6. The joint structure according to claim 3, wherein
   a member which is the first member or the second member and in which the insertion member is inserted holds the insertion member in a state of having been punched out by the insertion member, and
   a diameter d of the shaft and a thickness t of the member in which the insertion member is inserted satisfy the following relationship (3):

$$d \geq 3.3t \ldots (3)$$

7. The joint structure according to claim 3, wherein the shaft has Vickers hardness of 140 Hv or more.

8. A method for manufacturing a joint structure by joining a first member comprising a high tensile strength steel and a second member comprising a high tensile strength steel, the method comprising:

    a step of inserting a steel insertion member into the second member and holding it; and
    a step of superposing the second member on the first member and forming a welded part of the insertion member and the first member in an insertion tip of the insertion member,
    wherein a carbon equivalent Ceq of the insertion member is lower than a carbon equivalent Ceq of the second member, provided that the carbon equivalent Ceq is a value defined by the following formula (1):

$$Ceq = C + Si/30 + Mn/20 + 2P + 4S \qquad \ldots (1)$$

    wherein C, Si, Mn, P and S each represent a content (mass %) of each element, and when the element is not contained, the content thereof is 0.

9. A method for manufacturing a joint structure by joining a first member comprising a high tensile strength steel and a second member comprising a high tensile strength steel, the method comprising:

    a step of inserting steel insertion members into the first member and the second member, respectively, and holding them; and
    a step of superposing the second member on the first member so that the insertion members face each other, and forming a welded part from these insertion members in insertion tips of the insertion members,
    wherein a carbon equivalent Ceq (M1) of first member, a carbon equivalent Ceq (M2) of the second member, a carbon equivalent Ceq (N1) of the insertion member inserted in the second member and a carbon content Ceq (N2) of the insertion member inserted in the first member satisfy the following relationships (1) and (2):

$$Ceq = C + Si/30 + Mn/20 + 2P + 4S \qquad \ldots (1)$$

    wherein C, Si, Mn, P and S each represent a content (mass %) of each element, and when the element is not contained, the content thereof is 0; and

$$Ceq\ (M1) + Ceq\ (M2) \geq Ceq\ (N1) + Ceq\ (N2) \ldots (2).$$

10. The method for manufacturing a joint structure according to claim 8, wherein the insertion member has a shaft and a head having a diameter larger than that of the shaft, and the insertion member is welded to the first member with the head being left on the surface of the second member.

11. The method for manufacturing a joint structure according to claim 9, wherein each of the insertion members has a shaft and a head having a diameter larger than that of the shaft, and the insertion members are welded to each other with the heads being left on the surfaces of the first member and the second member, respectively.

12. The method for manufacturing a joint structure according to claim 10, wherein the shaft of the insertion member is allowed to penetrate through a member which is the first member or the second member and in which the insertion member is inserted,

13. The method for manufacturing a joint structure according to claim 10, wherein the head of the insertion member is caulked to a member which is the first member or the second member and in which the insertion member is inserted.

**14.** The method for manufacturing a joint structure according to claim 10, wherein in the step of inserting the insertion member into the first member or the second member and holding it, the insertion member is held by driving it in the first member or the second member, and

a diameter d of the shaft and a thickness t of the member in which the insertion member is inserted satisfy the following relationship (3):

$$d \geq 3.3t \ ... \ (3).$$

**15.** The method for manufacturing a joint structure according to claim 10, wherein the shaft has Vickers hardness of 140 Hv or more.

FIG. 1

FIG. 2

(A)                        (B)                        (C)

FIG. 3

(A)

15

21

23

(B)

25

21

23

27

FIG. 4

FIG. 5

FIG. 6

(A)

(B)

(C)

FIG. 7

FIG. 8

FIG. 9

FIG. 10

(A)

(B)

## INTERNATIONAL SEARCH REPORT

| International application No. |
|---|
| PCT/JP2017/017578 |

### A. CLASSIFICATION OF SUBJECT MATTER
*B23K11/16*(2006.01)i, *B23K11/11*(2006.01)i

According to International Patent Classification (IPC) or to both national classification and IPC

### B. FIELDS SEARCHED

Minimum documentation searched (classification system followed by classification symbols)
B23K11/16, B23K11/11

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2007-521964 A (Adam Opel AG), 09 August 2007 (09.08.2007), claims; paragraphs [0027] to [0029]; fig. 1 to 2 & US 2005/0161965 A1 paragraphs [0028] to [0030]; fig. 1 to 2 & WO 2005/070609 A2 & EP 2052802 A1 & KR 10-2006-0129404 A & CN 1938120 A | 1-15 |
| Y | JP 2002-219576 A (Nippon Steel Corp.), 06 August 2002 (06.08.2002), paragraphs [0005] to [0006] (Family: none) | 1-15 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 July 2017 (07.07.17) | 18 July 2017 (18.07.17) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 459 671 A1**

**INTERNATIONAL SEARCH REPORT**

International application No.

PCT/JP2017/017578

C (Continuation).  DOCUMENTS CONSIDERED TO BE RELEVANT

| Category* | Citation of document, with indication, where appropriate, of the relevant passages | Relevant to claim No. |
|---|---|---|
| Y | WO 2015/117059 A1 (ALCOA INC.), 06 August 2015 (06.08.2015), page 40, line 10 to page 41, line 17; fig. 31, 46 to 47 & JP 2017-510464 A       & KR 10-2016-0117556 A & CN 106163721 A | 2-7,9,11 |
| Y | JP 56-17145 A (Wako Electronics Inc.), 18 February 1981 (18.02.1981), fig. 2 to 3 (Family: none) | 2-7,9,11 |
| Y | JP 2014-580 A (Kobe Steel, Ltd.), 09 January 2014 (09.01.2014), paragraphs [0033] to [0042]; fig. 4 (Family: none) | 3-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012167338 A
- JP 2013010139 A
- WO 2011013793 A1
- JP 2016101294 A
- JP 2017074691 A